# FASCICULE DE BREVET EUROPEEN

(11) **EP 2 333 449 B1**
(45) Date de publication et mention de la délivrance du brevet: **10.09.2014**
(21) Numéro de dépôt: 10192461.1
(22) Date de dépôt: 24.11.2010
(51) Int. Cl.: F24H 1/18, F24H 9/20, F16L 59/00, F17C 3/10, F28D 1/06, F28D 20/00

(54) **Dispositif de chauffe-eau avec récupération des pertes thermiques**
Warmwasseraufbereitungsvorrichtung mit Rückgewinnung von Wärmeverlusten
Water-heating device with heat-loss recovery

(30) Priorité: 25.11.2009 FR 0958361
(43) Date de publication de la demande: 15.06.2011
(73) Titulaire: Electricité de France, 75008 Paris (FR)
(72) Inventeur: Radulscu, Mihai, 77250 Moret-sur-Loing (FR)
(74) Mandataire: Regimbeau

(56) Documents cités:
- CA-A1- 2 552 416
- DE-A1- 19 703 719
- DE-A1-102005 059 029
- DE-U1- 8 811 561
- FR-A1- 2 902 863
- FR-A1- 2 922 001
- GB-A- 2 070 744

## Description

L'invention concerne le domaine des dispositifs de ballons d'eau chaude. Plus précisément encore, l'invention concerne les dispositifs de ballons d'eau chaude comprenant un volume de stockage d'eau, des moyens de chauffage de l'eau et des moyens d'isolation thermique du ballon.

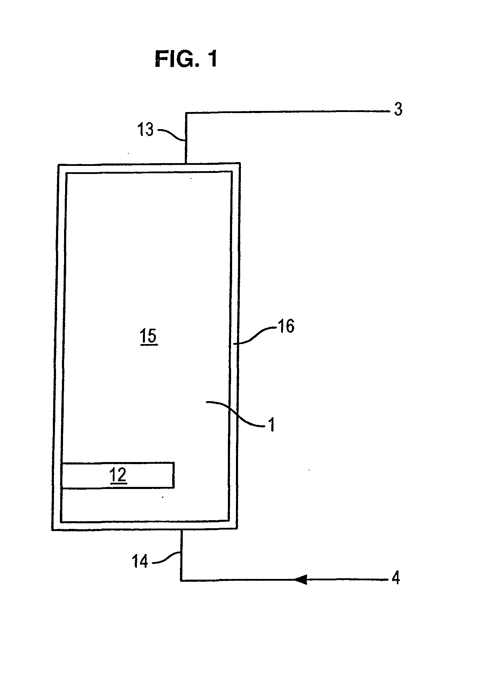

En référence à la figure 1, un dispositif de chauffe-eau selon l'état de la technique, comprend un volume de stockage d'eau chaude 15, des moyens de chauffage de l'eau 12 et une sortie d'eau chaude 13, généralement connectée à un circuit d'utilisation d'eau chaude sanitaire ainsi qu'une entrée d'eau froide 14 connectée à une arrivée d'eau froide 4.

Un tel dispositif comprend en outre un élément d'isolation thermique 16 permettant d'assurer l'isolation thermique du volume d'eau chaude 15 afin que l'énergie qui est dépensée pour chauffer l'eau via les moyens de chauffage 12 ne soit pas perdue par dissipation thermique de la paroi du volume de stockage d'eau chaude 15.

Un tel dispositif est largement connu de l'état de la technique.

Cependant, des critiques ont été émises quant à l'utilisation d'un tel dispositif. En effet, un tel dispositif, bien que comprenant une couche extérieure d'isolation, a toujours des pertes thermiques mêmes réduites. Or, il n'existe pas à ce jour de solution efficace permettant de récupérer les pertes thermiques d'un ballon.

En effet, une solution serait la fabrication d'un ballon ayant une couche extérieure d'isolation thermique plus épaisse. Cependant une telle solution engendre un surcoût de fabrication et ne permet pas l'amélioration d'un ballon déjà fabriqué.

De plus, une telle solution ne permet pas de récupérer les pertes thermiques de la couche d'isolation plus épaisse.

Pour finir, cette solution nécessite une augmentation du volume du dispositif d'eau chaude parfois conséquente, ce qui complexifie son installation.

Le document DE 8811561, qui est considéré comme l'état de la technique le plus proche de l'objet de la revendication 1, décrit un dispositif de ballon d'eau chaude comprenant un volume de stockage d'eau chaude, des moyens de chauffage de l'eau, le volume de stockage comprenant une sortie d'eau chaude, une couche extérieure d'isolation thermique et une entrée d'eau froide connectée à une arrivée d'eau froide.

Les documents DE 19703719 et DE 102005059029 décrivent des dispositifs comprenant une jaquette externe apte à contenir de l'eau et étant en communication thermique avec la couche d'isolation thermique afin de récupérer l'énergie thermique émanant de la couche d'isolation, mais respectivement avec une jaquette connectée directement au volume de stockage d'eau chaude ou une jaquette externe connectée à un deuxième volume de stockage.

En conséquence, un but de la présente invention est de fournir un dispositif de ballon d'eau chaude amélioré par rapport à l'état de la technique.

Plus précisément, l'objet de la présente invention est de fournir un dispositif de ballon d'eau chaude qui puisse récupérer les pertes thermiques malgré l'utilisation d'une couche extérieure d'isolation.

Un autre objet de la présente invention est de fournir un procédé de rénovation d'un dispositif de ballon d'eau chaude permettant de pouvoir récupérer les pertes thermiques du volume de stockage malgré l'existence antérieure d'une isolation thermique, le procédé devant être simple d'installation et d'utilisation et être peu coûteux.

A cet effet, l'invention concerne un dispositif de ballon d'eau chaude selon la revendication 1 annexée.

Avantageusement mais facultativement, l'invention comprend au moins l'une des caractéristiques suivantes :
- le mitigeur est commandé par une unité de commande sensible à la température de l'eau contenue dans la jaquette,
- l'unité de commande comprend des moyens de mesure des températures de l'eau contenue ou sortant de la jaquette et/ou de l'eau chaude contenue ou sortant du moyen de stockage,
- la jaquette comprend une membrane composée d'un matériau permettant l'adhérence aux métaux et/ou aux matériaux plastiques,
- le matériau de la membrane de la jaquette comprend au moins l'un des matériaux suivants : polypropylène, PVC, élastomère, hydrel,
- la jaquette a une capacité allant de 10 à 50 litres,
- la jaquette a une épaisseur d'environ 1 cm autour de la couche d'isolation thermique,
- la jaquette présente une épaisseur comprise entre 0,5 et 5 cm autour de la couche d'isolation thermique.

L'invention concerne également un procédé de rénovation d'un ballon d'eau chaude comprenant un volume de stockage d'eau chaude, munie d'une entrée d'eau froide connectée à une arrivée d'eau froide, des moyens de chauffage de l'eau et une sortie d'eau chaude, le volume comprenant une couche extérieure d'isolation thermique, caractérisé en ce que le procédé comprend les étapes suivantes :
a) mise en place autour du volume de stockage d'eau chaude, d'une jaquette apte à contenir de l'eau, de sorte que la jaquette soit en communication thermique avec la couche d'isolation thermique,
b) mise en place de moyens de récupération de l'eau contenue dans la jaquette, les moyens des récupérations comprenant une sortie connectée via un mitigeur à la sortie d'eau chaude du volume de stockage.

D'autres caractéristiques, buts et avantages de la présente invention apparaîtront à la lecture de la description détaillée qui va suivre, au regard des figures annexées, données à titre d'exemple non limitatif et sur lesquelles :
- la figure 1 est une représentation schématique d'un dispositif de ballon d'eau chaude selon l'état de la technique,
- la figure 2 est une représentation schématique d'un dispositif de ballon d'eau chaude selon une réalisation possible de la présente invention,
- la figure 3 est une représentation schématique d'un dispositif de ballon d'eau chaude selon une autre réalisation possible de la présente invention ; et
- la figure 4 est un graphe fonctionnel d'un procédé selon un mode de réalisation de la présente invention.

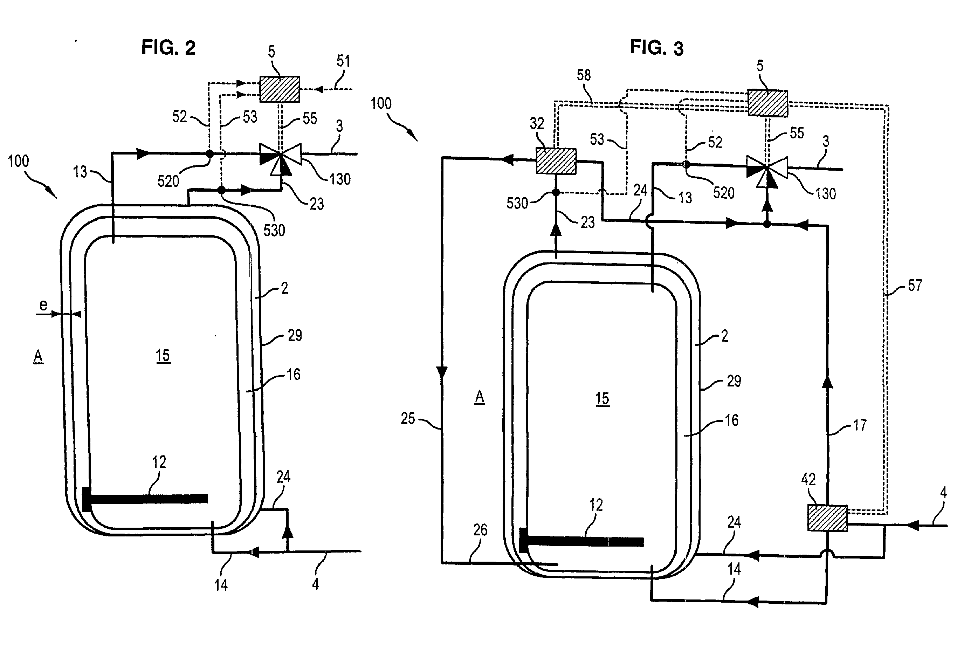

En référence à la figure 2, un dispositif de ballon d'eau chaude 100 selon une réalisation possible de la présente invention comprend un volume de stockage d'eau chaude 15, dans lequel sont agencés des moyens de chauffage 12 de l'eau contenue dans le volume de stockage. Ces moyens de chauffage 12 peuvent être de toute nature permettant l'apport d'une énergie thermique à l'eau contenue dans le volume de stockage 15 afin de la « chauffer ».

A titre d'exemple, les moyens de chauffage 12 peuvent être électriques (résistance électrique), hydraulique (serpentin dans lequel circule un fluide caloporteur chauffé par une chaudière à gaz, fioul, bois etc. ou par une pompe à chaleur, ou par une autre source de chaleur), solaire

(serpentin dans lequel circule un fluide caloporteur chauffé par un capteur héliothermique). On entend plus généralement par « volume de stockage » 15, le ballon d'eau chaude en lui-même et ses caractéristiques structurelles comme la couche d'isolation. Pour des puissances thermiques élevées, il est possible de remplacer l'échangeur hydraulique immergé dans le ballon par un échangeur externe (comme une chaudière à gaz ou tout autre élément extérieur au volume de stockage 15). Dans ce cas, le volume a simplement une fonction de stockage.

Le volume de stockage d'eau chaude 15 est généralement de géométrie cylindrique avec une section substantiellement circulaire. Cependant toute autre géométrie pourra être apportée au volume d'eau chaude 15 sans sortir du cadre de la présente invention.

Le volume d'eau chaude 15 est agencé avec une couche extérieure d'isolation 16. Une telle couche d'isolation 16 est réalisée en tout matériau permettant d'effectuer une isolation thermique entre l'eau contenue dans le volume de stockage d'eau chaude 15 et l'extérieur du dispositif 100, généralement entouré d'air ambiant A. Une telle couche d'isolation thermique est largement connue de l'état de la technique et ne sera pas plus détaillée.

Le volume de stockage 15 comprend également d'une part une entrée d'eau froide 14 connectée à une arrivée d'eau froide 4 ; cette entrée d'eau froide 14 étant connectée au niveau d'une partie basse du volume d'eau chaude.

Le volume de stockage 15 comprend également une sortie d'eau chaude 13 connectée par exemple à un réseau d'utilisation d'eau chaude sanitaire 3.

Le dispositif de chauffe-eau 100 comprend en outre une jaquette 2 apte à contenir de l'eau et en communication thermique avec la couche d'isolation thermique 16. Cette jaquette est réalisée dans tout matériau permettant une absorption de l'énergie thermique émanant de la couche d'isolation 16 afin de pouvoir chauffer l'eau à l'intérieur de cette jaquette 2.

Cette jaquette présente également une géométrie telle qu'elle peut s'adapter au volume d'eau chaude 15. Plus précisément, il est prévu qu'une telle jaquette 2 ait une géométrie et une flexibilité permettant l'adaptation de cette jaquette à la plupart des volumes standards que présentent les dispositifs de ballon d'eau chaude du marché.

La jaquette 2 comprenant plus précisément une membrane 29 constituant l'enveloppe de la jaquette au sein de laquelle est contenue l'eau de la jaquette. Cette membrane 29 doit répondre aux contraires suivants :
- une étanchéité à l'eau,
- une flexibilité permettant à la Jacquette 2 d'épouser la forme du cylindre,
- une résistance à la crevaison ainsi qu'à la déchirure et une adhérence aux métaux et/ou aux matériaux plastiques pour la fixation de la jaquette. L'adhérence aux matériaux permet à la jaquette 2 de pouvoir augmenter la surface de contact entre la jaquette et la surface extérieure de la couche d'isolation 16. Meilleure sera l'adhérence aux métaux, meilleure sera la récupération par la jaquette 2 des pertes thermiques de la couche d'isolation 16.

Avantageusement, la membrane sera dans un matériau permettant une bonne résistance à la flexion et à la traction, et un bon vieillissement de la jaquette.

Préférentiellement, la membrane de la jaquette est en matériaux élastomères. On peut également utiliser des matériaux thermoplastiques tels que le polypropylène ou le PVC souple dont les propriétés sont proches de celles des élastomères.

Tous ces matériaux ont l'avantage d'être bon marché au regard de la taille de la jaquette 2.

Ainsi, la membrane 29 de la jaquette 2 peut comprendre au moins l'un des matériaux suivants :
o un thermoplastique : préférentiellement le polypropylène ou le PVC souple ;
o un élastomère : préférentiellement le VLDPE, le Butyle ou l'EPDM ;
o un dérivé à la fois des thermoplastiques et des élastomères : préférentiellement l'Hytrel.

Bien évidemment, il est également possible de combiner plusieurs de ces matériaux ou leurs éventuels dérivés (par exemple des copolymères greffés).

Avantageusement, pour ralentir les pertes thermiques de la couche d'isolation thermique, la jaquette peut être dotée d'un film réflecteur sur la surface intérieure qui vient en contact avec l'isolation du ballon. Ce film diminue le transfert thermique par rayonnement entre l'isolation du volume de stockage 15 et la jaquette 2.

Le dispositif de chauffe-eau 100 comprend également une entrée d'eau froide 24 connectée à l'arrivée d'eau froide 4 d'une part et d'autre part connectée à une partie basse de la jaquette 2. De plus, la jaquette 2 comprend une sortie 23 au niveau d'une partie haute de la jaquette connectée à un mitigeur 130 agencé sur la sortie 13 du dispositif de chauffe-eau. C'est-à-dire que le mitigeur 130 comprend deux entrées, respectivement connectées aux sorties 13 et 23, la sortie du mitigeur 130 étant connectée au réseau d'utilisation 3 de l'eau chaude. Ainsi, l'eau froide arrivant par l'entrée 24 est introduite au sein de la jaquette 2 grâce à la pression existant au niveau de l'arrivée d'eau froide 4. La jaquette se remplit alors d'eau froide tout autour de la couche d'isolation 16 du volume de stockage 15.

En conséquence, les pertes existant malgré l'utilisation de la couche d'isolation externe 16 sont récupérées via la communication thermique entre la jaquette 3 et la couche isolante thermique 16 par l'eau contenue au sein de ladite jaquette 2. Ainsi, l'eau contenue dans la jaquette 2 est chauffée par la communication thermique entre la couche isolante 16 et la jaquette 2.

La sortie d'eau 23, permettant de récupérer l'eau dans la jaquette, est connectée à la sortie d'eau chaude 13 via le mitigeur 130. Un tel agencement permet de récupérer une partie de l'énergie thermique récupérée par la jaquette par l'adjonction de l'eau provenant de la jaquette.

La jaquette isolante 2 permet d'assurer la fonction de volume tampon entourant la quasi-totalité du volume de stockage. L'eau chaude contenue dans le volume de stockage échange de la chaleur avec le volume d'eau de la jaquette à travers la couche d'isolation 16 du ballon car la jaquette 2 est en communication thermique avec la couche d'isolation 16. Ce volume tampon permet d'accumuler une partie de l'énergie qu'il reçoit du ballon d'eau chaude.

Le volume de la jaquette est relativement faible, de 10 l à 50 l environ ce qui représente une épaisseur « e » allant d'environ 0.5cm à environ 5cm et préférentiellement d'environ 1 cm autour de la couche isolante 16 du ballon, et généralement représente au maximum 10% du volume du ballon. La jaquette est remplie à l'aide de l'eau froide du réseau, qui est à une température généralement comprise entre 8°C et 15°C. Une fois en communication thermique avec la couche d'isolation 16 du ballon, l'eau de la jaquette 2 se réchauffe lentement de quelques degrés à une température d'environ 22°C. Ainsi, l'écart de température entre le volume d'eau tampon (de la jaquette 2) et l'air ambiant A est assez faible : les déperditions thermiques de la jaquette avec l'extérieur sont donc beaucoup plus faibles que celles d'un ballon comprenant simplement une couche d'isolation.

Selon une réalisation possible de la présente invention, il est prévu que le mitigeur 130 soit contrôlé par une unité de contrôle 5 via un moyen de transmission d'information 55 (filaire, sans fil ou tout autre moyen connu de l'état de la technique). Avantageusement, cette unité de contrôle 5 comprend en entrée une information relative à la température de l'eau contenue ou sortant de la jaquette 2, par exemple à l'aide d'un moyen de mesure de la température 530 de l'eau connecté à l'unité de contrôle 5 par un moyen de transmission d'information 53 ; ce moyen de mesure 530 pouvant être placé au sein de la jaquette 2 ou au niveau de la sortie d'eau 23. Cette unité de contrôle 5 comprend également en entrée une information relative à la température de l'eau contenue ou sortant du volume de stockage 15, à l'aide d'un moyen de mesure de la température de l'eau 520 connecté à l'unité de contrôle 5 par un moyen de transmission d'information 52 ; ce moyen de mesure 520 pouvant être placé au sein du volume de stockage 15 ou au niveau de la sortie d'eau 13. En fonction de ces informations, l'unité de contrôle 5 contrôle le mitigeur 130 afin que ce dernier ajoute à la sortie d'eau chaude 13 de l'eau provenant de la jaquette 2. Ainsi, si la température de l'eau contenue dans la jaquette 2 dépasse une certaine température (par exemple 22°C), l'unité de contrôle 5 va « récupérer » l'eau de la jaquette 2, ce qui va permettre l'introduction d'eau froide dans la jaquette 2 par l'entrée 24. En effet, si la température de l'eau contenue dans la jaquette est trop élevée, cela peut augmenter les pertes thermiques entre la jaquette et l'air ambiant A et donc détériorer l'efficacité du dispositif selon l'invention.

En référence à la figure 3 et selon une autre réalisation possible de la présente invention, un dispositif d'eau chaude 100 comprend un volume de stockage d'eau chaude 15, des moyens de chauffage de l'eau 12, et une sortie d'eau chaude 13. Le volume d'eau chaude 15 comprend également une couche extérieure d'isolation 16 et une jaquette 2 apte à contenir de l'eau et étant en communication thermique avec la couche d'isolation 16.

De plus, il est prévu des moyens de distribution 42 et 32 agencés respectivement au niveau de l'arrivée d'eau froide 4 et de la sortie d'eau de la jaquette 23, ces deux éléments de distribution étant avantageusement contrôlés par une unité de contrôle 5 via les moyens de transmission d'information 57 et 58, respectivement. Via le contrôle des deux éléments de distribution 42, l'unité de contrôle 5 choisit quel(s) élément(s) de connexion est (sont) alimenté(s) par l'eau froide de l'arrivée d'eau froide 4 parmi :
- l'entrée d'eau froide 14 du volume de stockage d'eau chaude, ou
- l'élément de canalisation 17 connecté sur le mitigeur 130.

Quant à l'élément de distribution 32, l'unité de contrôle 5 choisit de réinjecter l'eau contenue en sortie de la jaquette 23 :
- soit au niveau de la partie basse du volume de stockage d'eau chaude 15 via la canalisation 25, ou
- soit au niveau du mitigeur 130 via la canalisation 24.

Ainsi l'utilisation et la commande de ces deux éléments de distribution permet avantageusement de passer d'un mode de réalisation à l'autre entre deux modes de réalisation :
- l'un présenté à la figure 2,
- et l'autre dans lequel l'eau froide arrivant par l'arrivée d'eau froide 4 transite premièrement par la jaquette 2 par l'entrée 24, puis est injectée en sortie 23 de la jaquette 2 dans le ballon d'eau chaude par l'entrée 14.

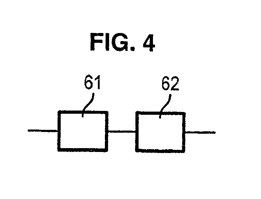

En référence à la figure 4, et selon une réalisation possible de la présente invention, l'invention concerne un procédé de rénovation d'un ballon d'eau chaude comprenant un volume de stockage d'eau chaude, des moyens de chauffage d'eau chaude et une sortie d'eau chaude, le volume comprenant une couche extérieure d'isolation thermique. Ce procédé comprend les étapes suivantes :
- la mise en place d'une jaquette apte à contenir de l'eau, de sorte que la jaquette soit en communication thermique avec la couche d'isolation thermique (étape 61),
- la mise en place de moyens de récupération de l'eau contenue dans la jaquette (étape 62).

Ces moyens de récupération peuvent être ceux décrits aux différents modes de réalisation des figures 2 et 3.

Plus précisément, le procédé comprend au moins les étapes suivantes :
a. mise en place (étape 61) autour du volume de stockage d'eau chaude 15, d'une jaquette 2 apte à contenir de l'eau, de sorte que la jaquette soit en communication thermique avec la couche d'isolation thermique 16,
b. mise en place (étape 62) de moyens de récupération 23 (et éventuellement 25) de l'eau contenue dans la jaquette 2, les moyens des récupérations comprenant une sortie 23 connectée via un mitigeur 130 à la sortie d'eau chaude 13 du volume de stockage 15.

## Revendications

1. Dispositif de ballon d'eau chaude (100) comprenant un volume de stockage d'eau chaude (15), des moyens de chauffage de l'eau (12), le volume de stockage comprenant une sortie d'eau chaude (13) et une couche extérieure d'isolation thermique (16) le volume de stockage d'eau chaude (15) étant muni d'une entrée d'eau froide (14) connectée à une arrivée d'eau froide (4), **caractérisé en ce que** le dispositif comprend en outre une jaquette externe (2) apte à contenir de l'eau et étant en communication thermique avec la couche d'isolation thermique (16) afin de récupérer l'énergie thermique émanant de la couche d'isolation et **en ce que** le dispositif (100) comprend des moyens de récupération (23, 25) de l'eau contenue dans la jaquette (2), les moyens de récupération de l'eau contenue dans la jaquette (2) comprenant une sortie (23) connectée via un mitigeur (130) à la sortie eau chaude (13) du volume de stockage (15).

2. Dispositif de ballon selon la revendication 1, **caractérisé en ce que** le mitigeur (130) est commandé par une unité de commande (5), comprenant des moyens de mesure des températures de l'eau contenue ou sortant de la jaquette (2) et/ou de l'eau chaude contenue ou sortant du moyen de stockage (15).

3. Dispositif selon la revendication 1 ou 2, **caractérisé en ce que** la jaquette (2) comprend une membrane (29) composée d'un matériau permettant l'adhérence aux métaux et/ou aux matériaux plastiques.

4. Dispositif selon l'une des revendications 1 à 3, **caractérisé en ce que** le matériau de la membrane (29) de la jaquette (2) comprend au moins l'un des matériaux suivants : polypropylène, PVC, élastomère, hydrel.

5. Dispositif selon l'une des revendications précédentes **caractérisé en ce que** la jaquette (2) a une capacité allant de 10 à 50 litres.

6. Dispositif selon l'une des revendications précédentes **caractérisé en ce que** la jaquette (2) présente une épaisseur comprise entre 0,5 et 5 cm autour de la couche d'isolation thermique (16).

7. Procédé de rénovation d'un ballon d'eau chaude (100) comprenant un volume de stockage d'eau chaude (15), munie d'une entrée d'eau froide (14) connectée à une arrivée d'eau froide (4), des moyens de chauffage de l'eau (12) et une sortie d'eau chaude (13), le volume (15) comprenant une couche extérieure d'isolation thermique (16), **caractérisé en ce que** le procédé comprend les étapes suivantes :
a. mise en place (61) autour du volume de stockage d'eau chaude (15), d'une jaquette (2) apte à contenir de l'eau, de sorte que la jaquette soit en communication thermique avec la couche d'isolation thermique (16),
b. mise en place (62) de moyens de récupération (23, 25) de l'eau contenue dans la jaquette (2), les moyens des récupérations comprenant une sortie (23) connectée via un mitigeur (130) à la sortie d'eau chaude (13) du volume de stockage (15).

## Patentansprüche

1. Warmwasserboilervorrichtung (100), die ein Speichervolumen für Warmwasser (15) und ein Mittel zum Erhitzen des Wassers (12) umfasst, wobei das Speichervolumen einen Warmwasser-Auslass (13) und eine Außenschicht zur Wärmeisolierung (16) umfasst und wobei das Warmwasser-Speichervolumen (15) mit einem Kaltwasser-Einlass (14) ausgestattet ist, der an eine Kaltwasserzuleitung (4) angeschlossen ist, **dadurch gekennzeichnet, dass** die Vorrichtung außerdem eine Außenummantelung (2) umfasst, die dafür eingerichtet ist, Wasser zu enthalten und die in thermischer Verbindung mit der Schicht zur Wärmeisolierung (16) steht, um die Wärmeenergie zurückzugewinnen, die von der Isolierschicht abgegeben wird, und dadurch, dass die Vorrichtung (100) ein Mittel zur Rückgewinnung (23, 25) des Wassers umfasst, das in der Ummantelung (2) enthalten ist, wobei das Mittel zur Rückgewinnung des in der Ummantelung (2) enthaltenen Wassers einen Auslass (23) umfasst, der über einen Mischer (130) an den Warmwasser-Auslass (13) des Speichervolumens (15) angeschlossen ist.

2. Boilervorrichtung nach Anspruch 1, **dadurch gekennzeichnet, dass** der Mischer (130) von einer Steuereinheit (5) gesteuert wird, die ein Mittel zur Messung der Temperaturen des Wassers, das in der Ummantelung (2) enthalten ist oder aus dieser austritt, und/oder des Warmwassers, das im Speichermittel (15) enthalten ist oder aus diesem austritt, umfasst.

3. Vorrichtung nach Anspruch 1 oder 2, **dadurch gekennzeichnet, dass** die Ummantelung (2) eine Membran (29) umfasst, die aus einem Material hergestellt ist, das das Haften an Metallen und/oder Kunststoffmaterialien gestattet.

4. Vorrichtung nach einem der Ansprüche 1 bis 3, **dadurch gekennzeichnet, dass** das Material der Membran (29) der Ummantelung (2) wenigstens eines der folgenden Materialien umfasst: Polypropylen, PVC, Elastomere, Hydrel.

5. Vorrichtung nach einem der vorhergehenden Ansprüche, **dadurch gekennzeichnet, dass** die Ummantelung (2) ein Fassungsvermögen hat, das zwischen 10 und 50 Liter liegt.

6. Vorrichtung nach einem der vorhergehenden Ansprüche, **dadurch gekennzeichnet, dass** die Ummantelung (2) eine Dicke hat, die um die Schicht zur Wärmeisolierung (16) herum zwischen 0,5 und 5 cm beträgt.

7. Verfahren zur Sanierung eines Warmwasserboilers (100), der Folgendes umfasst: ein Speichervolumen für Warmwasser (15), das mit einem Kaltwasser-Einlass (14) ausgestattet ist, der an eine Kaltwasserzuleitung (4) angeschlossen ist, ein Mittel zum Erhitzen des Wassers (12) und einen Warmwasser-Auslass (13), wobei das Volumen (15) eine Außenschicht zur Wärmeisolierung (16) umfasst, **dadurch gekennzeichnet, dass** das Verfahren die folgenden Schritte umfasst:
a. Anbringen (61) um das Warmwasser-Speichervolumen (15) herum einer Ummantelung (2), die dafür eingerichtet ist, Wasser zu enthalten, und dies derart, dass die Ummantelung in thermischer Verbindung mit der Schicht zur Wärmeisolierung (16) steht,
b. Anbringen (62) eines Mittels zur Rückgewinnung (23, 25) des Wassers, das in der Ummantelung (2) enthalten ist, wobei das Rückgewinnungsmittel einen Auslass (23) umfasst, der über einen Mischer (130) an den Warmwasser-Auslass (13) des Speichervolumens (15) angeschlossen ist.

## Claims

1. A hot water tank device (100) comprising a hot water storage volume (15), water-heating means (12), the storage volume comprising a hot water outlet (13) and an outer heat insulation layer (16), the hot water storage volume (15) being provided with a cold water inlet (14) connected to a cold water supply (4), **characterized in that** the device further comprises an external jacket (2) able to contain water and being in thermal communication with the heat insulation layer (16) in order to recover the heat energy emanating from the insulation layer and **in that** the device (100) comprises means (23, 25) for recovering water contained in the jacket (2), the means (23, 25) for recovering water contained in the jacket (2) comprising an outlet (23) connected via a mixing valve (130) to the hot water outlet (13) of the storage volume (15).

2. The tank device according to claim 1, **characterized in that** the mixing valve (130) is controlled by a control unit (5) comprising means for measuring temperatures of the water contained or flowing out of the jacket (2) and/or of the hot water contained or flowing out of the storage means (15).

3. The device according to claim 1 or 2, **characterized in that** the jacket (2) comprises a membrane (29) consisting of a material allowing adherence to metals and/or two plastic materials.

4. The device according to one of claims 1 to 3, **characterized in that** the material of the membrane (29) of the jacket (2) comprises at least one of the following materials: polypropylene, PVC, elastomer, hydrel.

5. The device according to one of the preceding claims, **characterized in that** the jacket (2) has a capacity ranging from 10 to 50 liters.

6. The device according to one of the preceding claims, **characterized in that** the jacket (2) has a thickness comprised between 0.5 and 5 cm around the heat insulation layer (16).

7. A method for refurbishing a hot water tank (100) comprising a hot water storage volume (15), provided with a cold water inlet (14) connected to a cold water supply (4), water-heating means (12) and a hot water outlet (13), the volume (15) comprising an outer heat insulation layer (16), **characterized in that** the method comprises the following steps:
a. placing (61) around the hot water storage volume (15) a jacket (2) able to contain water, so that the jacket is in thermal communication with the heat insulation layer (16),
b. placing (62) means (23, 25) for recovering the water contained in the jacket (2), the recovery means comprising an outlet (23) connected via a mixing valve (130) to the hot water outlet (13) of the storage volume (15).
